# EUROPEAN PATENT SPECIFICATION

(11) **EP 2 460 927 B1**
(45) Date of publication and mention of the grant of the patent: **26.02.2014**
(21) Application number: 10193492.5
(22) Date of filing: 02.12.2010
(51) Int. Cl.: D06F 58/20

(54) **Method of operating a heat pump dryer and heat pump dryer**
Verfahren zur Bedienung eines Wärmepumpentrockners und Wärmepumpentrockner
Procédé de fonctionnement de séchoir à pompe thermique et séchoir à pompe thermique

(43) Date of publication of application: 06.06.2012
(73) Proprietor: Electrolux Home Products Corporation N.V., 1130 Brussel (BE)
(72) Inventor: Pillot, Sergio, 33080 Porcia (PN) (IT); Zandona', Stefano, 33080 Porcia (PN) (IT)
(74) Representative: Nardoni, Andrea

(56) References cited:
- EP-A1- 0 999 302
- JP-A- 1 212 599
- US-A1- 2005 066 538

## Description

The present application is directed to a method of operating a heat pump dryer and a heat pump dryer.

Heat pump dryers and respective methods of operating the same are known for example from EP 0 999 302 B1, EP 1 884 586 A2 and US 2005/0066538. In tumble dryers, heated and dry process air is guided through wet clothing placed in a drying drum. The heated and dry process air absorbs moisture and thereby dries the clothing. After that, the process air is dehumidified, reheated and re-circulated through the dryer drum, and so on.

The known heat pump dryers use a primary heat pump unit for dehumidification and reheating. The primary heat pump unit comprises a primary refrigerant evaporator for cooling and dehumidification of process air and a primary refrigerant condenser for reheating process air.

With the known dryers, there is provided an auxiliary heat exchanger, in order to optimise dehumidification and reheating. In particular the heat-up phase can be shortened and, as the case may be, excess heat can be removed. It is known to use a fan to impinge an air stream, an ambient air stream for example, at the auxiliary heat exchanger thereby further optimising the drying process. Albeit the known heat pump dryers with auxiliary heat exchanger are more effective than ordinary heat pump dryers, it is still desirable to further optimize the drying process, in particular in view of energy efficiency.

It is therefore an object of the present invention to provide a more efficient method of operating a heat pump dryer, preferably a heat pump tumble dryer, comprising an auxiliary heat exchanger. Further, a respective heat pump dryer shall be provided, preferably a heat pump tumble dryer.

This object is achieved by the independent claims. Embodiments of the invention result from dependent claims.

According to the present invention there is provided a method of operating a heat pump dryer, the heat pump dryer comprising a process air circuit and a heat pump unit having a primary refrigerant evaporator for cooling process air, a primary refrigerant condenser for heating process air , an auxiliary refrigerant evaporator arranged outside the process air circuit and connected between the primary refrigerant evaporator and a compressor of the heat pump unit, and at least one auxiliary fan adapted to impinge an air stream at the auxiliary refrigerant evaporator, wherein the at least one auxiliary fan is activated and deactivated by a control unit according to at least one of
- a temperature of the refrigerant and/or a pressure of the refrigerant, both preferably measured near or at a refrigerant outlet (9) of the primary refrigerant evaporator (6),
- a temperature of refrigerant near or at an refrigerant outlet or inlet of the auxiliary refrigerant evaporator (16),
- a temperature of the air near or at the auxiliary refrigerant evaporator (16),
- a temperature difference between refrigerant and air near or at the auxiliary refrigerant evaporator (16).

Preferably, wherein the at least one auxiliary fan is activated and deactivated according to a temperature difference between refrigerant and air near or at the auxiliary refrigerant evaporator, the refrigerant temperature being measured at the inlet or outlet of the primary refrigerant evaporator or at the inlet or outlet of the auxiliary refrigerant evaporator.

Preferably, respective temperature and pressure values used by the control unit are measured by at least one of a temperature sensor, humidity sensor and pressure sensor, respectively, of the heat pump dryer. Preferably, at least one of the at least one auxiliary fan is activated if the temperature of the refrigerant near or at an outlet of the primary refrigerant evaporator or near or at an inlet of the auxiliary heat exchanger is at least below a first preset temperature, and wherein the at least one fan is deactivated if the temperature of the refrigerant near or at an outlet of the primary refrigerant evaporator or near or at an inlet of the auxiliary heat exchanger is at least above the first preset temperature.

Preferably, at least one of the at least one auxiliary fan is activated if the temperature of the respective fan air stream is at least above the temperature of the refrigerant at the refrigerant outlet of the primary refrigerant evaporator or inlet of the auxiliary heat exchanger, and wherein the at least one fan is deactivated if the temperature of the fan air stream is at least below the temperature of the refrigerant at the refrigerant outlet of the primary refrigerant evaporator. Preferably, the auxiliary refrigerant evaporator is a dual mode auxiliary heat exchanger arranged outside the process air circuit and operated in refrigerant evaporator mode, said dual mode auxiliary heat exchanger being adapted to be operated in refrigerant condenser mode.

Preferably, ambient air heated up by heat released from a waste heat generating components of the heat pump dryer is impinged at the auxiliary refrigerant evaporator.

According to the present invention there is provided a heat pump dryer comprising a process air circuit and a primary heat pump unit having a primary refrigerant evaporator for cooling process air a primary refrigerant condenser for heating process air, an auxiliary refrigerant evaporator, connected between the primary refrigerant evaporator and a compressor of the heat pump unit, and at least one auxiliary fan adapted to impinge an air stream at the auxiliary refrigerant evaporator, wherein a control unit (20) is adapted and designed for operating the heat pump dryer according to a method as previously described.

Preferably, at least a waste heat generating component of the heat pump dryer, the auxiliary refrigerant evaporator and the auxiliary fan are mutually arranged so that the auxiliary fan is adapted to impinge ambient air heated up by heat released from said waste heat generating component at the auxiliary evaporator, and/or at least a temperature sensor is arranged outside the process air circuit and provided for detecting the temperature of the ambient air around the location where the auxiliary refrigerant evaporator is arranged.

Preferably, the mutual arrangement of the auxiliary refrigerant evaporator, the auxiliary fan and the waste heat generating component of the heat pump dryer with respect to the air stream an auxiliary fan airflow is at least one of:
- the auxiliary fan, auxiliary refrigerant evaporator and waste heat generating component are arranged in series
- the auxiliary fan is arranged between the waste heat generating component and the auxiliary refrigerant evaporator,
- the auxiliary refrigerant evaporator is arranged between the waste heat generating component and the auxiliary fan,
- the auxiliary fan, auxiliary refrigerant evaporator and waste heat generating component are substantially aligned with respect to the air stream generated by the auxiliary fan,
- the auxiliary fan, auxiliary refrigerant evaporator and waste heat generating component are substantially arranged along the direction of the air stream generated by the auxiliary fan.

Preferably, the temperature sensor is arranged at least one of
- near or at the auxiliary refrigerant evaporator,
- near or at the auxiliary fan,
- between the auxiliary refrigerant evaporator and the auxiliary fan,
- between the waste heat generating component of the heat pump dryer, and the auxiliary fan,
- between the waste heat generating component of the heat pump dryer and the auxiliary refrigerant evaporator.

Preferably, the waste heat generating component comprises an electric device and/or and electronic device and/or a powered device and/or a passive device.

Preferably, the waste heat generating component comprises at least one electric motor and/or at least one controller for varying the speed of an electric motor, preferably an inverter.

Preferably, the auxiliary refrigerant evaporator is an auxiliary dual mode heat exchanger arranged outside the process air circuit and operable in refrigerant evaporator mode or in refrigerant condenser mode. Preferably, the heat pump dryer further comprises an auxiliary refrigerant condenser arranged outside the process air and connected between the primary refrigerant condenser and refrigerant expansion means of the heat pump unit.

According to one aspect, there is provided a method of operating a heat pump tumble dryer, which heat pump tumble dryer comprises a primary heat pump unit with at least one primary refrigerant evaporator for cooling process air, at least one primary refrigerant condenser for heating process air, at least one auxiliary heat exchanger arranged outside the process air circuit and connected or connectable between at least one of the at least one primary refrigerant evaporator and at least one of the at least one primary refrigerant condenser, and at least one auxiliary fan adapted to impinge an air stream at a respective one of the at least one auxiliary heat exchanger.

The at least one auxiliary fan can be activated and deactivated by a refrigerant cycle control unit using selected temperature, humidity and/or pressure values of at least one of the refrigerant and air near or at the auxiliary refrigerant evaporator.

The invention is inter alia based on the finding that the efficiency of such a heat pump tumble dryer can be improved if the temperature and/or pressure value is selected from the group comprising: the temperature of the refrigerant and a pressure of the refrigerant, both preferably measured near or at a refrigerant outlet or inlet of the primary evaporator or primary condenser, the temperature of refrigerant near or at an refrigerant outlet or inlet of the auxiliary refrigerant evaporator, an air temperature near or at the auxiliary refrigerant evaporator, in particular the temperature of the air stream impinging at the at least one auxiliary refrigerant evaporator, the temperature difference between refrigerant near or at the refrigerant outlet or inlet of the primary refrigerant evaporator or primary condenser and the air stream, a temperature difference between refrigerant and air near or at the auxiliary refrigerant evaporator.

The auxiliary heat exchanger may be an auxiliary refrigerant evaporator, which can be connected between the primary refrigerant evaporator and a compressor operating in the auxiliary refrigerant circuit. Here, the at least one auxiliary fan may be adapted to impinge an air stream at the auxiliary refrigerant evaporator.

The at least one auxiliary fan is activated and deactivated according to at least one of
- a temperature difference between refrigerant and air near or at the auxiliary refrigerant evaporator, the temperature preferably being measured near or at the primary refrigerant evaporator and
- an air temperature near or at the auxiliary refrigerant evaporator.

It is to be noted that "an air temperature near or at the auxiliary refrigerant evaporator or the auxiliary heat exchanger" indicates the temperature of the ambient air around the location/position/place where the auxiliary refrigerant evaporator or the auxiliary heat exchanger is arranged at the heat pump dryer.

Preferably, the auxiliary refrigerant evaporator or the auxiliary heat exchanger is arranged inside the external casing of the heat pump dryer and preferably it is provided at the basement of the heat pump dryer.

Preferably, respective temperature and pressure values used by the refrigerant cycle control unit are measured by at least one of a temperature sensor and pressure sensor of the heat pump tumble dryer, arranged at respective locations. The temperature sensor and pressure sensor may be of any known type. In particular, so called NTC (negative temperature coefficient) or also PTC (positive temperature coefficient) temperature sensors or other may be used.

At least one of the at least one auxiliary fan can for example be activated if the temperature of the refrigerant near or at an outlet of the primary refrigerant evaporator or near an inlet of the auxiliary heat exchanger is at least below a first preset temperature, and wherein the at least one fan is deactivated if the temperature of the refrigerant near or at an outlet of the primary refrigerant evaporator or near an inlet of the auxiliary heat exchanger is at least above a first preset temperature. This is of particular advantage, if the auxiliary heat exchanger is operated as an auxiliary refrigerant evaporator, as in this case heat of an air stream of ambient air and/or waste heat augmented air of components, in particular ambient air heated up by heat released from components, in particular electric and electronic components, of the dryer, such as a motor and the like or others, impinging at the auxiliary evaporator for example, can be efficiently exploited, i.e. used to speed-up the heat-up phase.

In particular, the fan can be activated if the respective fan air stream is at least above, i. e. above and/or equal, the temperature of the refrigerant at the outlet of the primary refrigerant evaporator. Here, the first preset temperature is the temperature of ambient air and/or waste heat augmented air of components, impinging at the auxiliary heat exchanger. In the present case, the auxiliary heat exchanger preferably is an auxiliary refrigerant evaporator. The at least one fan is deactivated if the temperature of the fan air stream is at least below the temperature of the refrigerant at the refrigerant outlet of the primary evaporator.

In an embodiment, at least one of the at least one auxiliary fan is deactivated if a temperature of refrigerant near or at an outlet of the primary or auxiliary heat exchanger is at least below a second preset temperature, and wherein the at least one auxiliary fan is activated if the temperature of refrigerant near or at an outlet of the primary or auxiliary heat exchanger is at least above a second preset temperature. Such an operational mode is of particular advantage if the auxiliary heat exchanger is operated as an auxiliary refrigerant condenser. Here it is possible remove excessive heat from the heat pump tumble dryer by cooling the auxiliary refrigerant condenser.

As already indicated, embodiments of the proposed method provide that at least one of the at least one auxiliary heat exchanger is operated as an auxiliary refrigerant evaporator and/or an auxiliary refrigerant condenser.

By using the auxiliary heat exchanger as auxiliary refrigerant evaporator coupled to the heat pump unit, the initial heat up phase of the heat pump unit can be shortened. Using the auxiliary heat exchanger as auxiliary refrigerant condenser excessive heat probably arising in the course of operating the heat pump tumble dryer can be removed. Hence, the performance of the heat pump tumble dryer can be improved.

In an embodiment, at least one of the auxiliary heat exchanger is operated in a dual mode, i. e. in a first operational cycle, as an auxiliary refrigerant evaporator and, in a second operational cycle, as an auxiliary refrigerant condenser. Here, a commutator, preferably comprising one or more valves, may be used to switch between evaporator and condenser mode. The evaporator mode can be used in the initial operational phase of the heat pump tumble dryer in order to speed-up the heat-up process. The condenser mode can be used in a later stage to remove excessive heat.

Switching between first and second operational modes can be carried out in response of at least one of:
- a temperature and/or pressure of the refrigerant,
- a temperature and/or humidity of the process air,
- a temperature of ambient air near or at the auxiliary heat exchanger,
- a temperature difference between ambient air temperature near or at the auxiliary heat exchanger and refrigerant temperature, preferably detected near or at the primary evaporator.

However, it is also possible that at least one of the at least one auxiliary heat exchanger is operated as an auxiliary refrigerant evaporator, and that at least one of the at least one auxiliary heat exchanger is operated as an auxiliary refrigerant condenser. In this case, both an auxiliary refrigerant evaporator and auxiliary refrigerant condenser are provided.

As already indicated above, at least one of ambient air and waste heat augmented air from components of the heat pump tumble dryer can be impinged at at least one of the at least one auxiliary heat exchanger by at least one of the at least one fan. Ambient air colder than condenser refrigerant can be impinged at the auxiliary refrigerant condenser in order to effectively remove excessive heat generated in the course of operating the heat pump tumble dryer. Ambient air and/or waste heat augmented air from components of the heat pump tumble dryer, having a temperature above evaporator refrigerant can be impinged at the auxiliary refrigerant evaporator in order to optimise heating-up in the initial operational phase of the heat pump tumble dryer.

As can be seen, ambient air as well as waste heat augmented air of components, such as motors and other electronic components, of the heat pump tumble dryer can be impinged in a first air stream at the auxiliary refrigerant evaporator by at least one first auxiliary fan. Further, ambient air can be impinged in a second air stream at the auxiliary refrigerant condenser by at least one second auxiliary fan.

In one embodiment there may be provided that the at least one auxiliary heat exchanger is deactivated by the controller unit in an intermediate operational stage between a first and second operational stage in which at least one of the at least one auxiliary heat exchanger is activated respectively. The intermediate phase can be the time interval between the initial phase in which an auxiliary heat exchanger is used for accelerating heating-up and the phase in which an auxiliary heat exchanger is used for removing excessive heat from the heat pump tumble dryer system.

As can be seen, the proposed method allows to operate a heat pump tumble dryer comprising an auxiliary heat exchanger more efficiently.

According to a further aspect, a heat pump tumble dryer is provided which comprises a primary heat pump unit with at least one primary refrigerant evaporator for cooling process air and at least one primary refrigerant condenser for heating process air, at least one auxiliary heat exchanger arranged outside the process air circuit and connected or connectable between at least one of the at least one primary refrigerant evaporator and at least one of the at least one primary refrigerant condenser.

At least one heat exchanger may be implemented to be operated as an auxiliary refrigerant evaporator and at least one heat exchanger may be implemented to be operated as an auxiliary refrigerant condenser.

The heat pump tumble dryer may further comprise at least one auxiliary fan adapted to impinge an air stream at a respective one of the at least one auxiliary heat exchanger. The fan may be arranged and adapted to impinge at least one of ambient air and waste heat augmented air from components of the heat pump tumble dryer at at least one of the at least one auxiliary heat exchanger, in particular either at an auxiliary refrigerant evaporator or at an auxiliary refrigerant condenser. In particular it is possible that at least one auxiliary fan is adapted and arranged to impinge an airflow at the auxiliary refrigerant evaporator and at least one auxiliary fan is adapted and arranged to impinge an airflow at the auxiliary refrigerant condenser. One or several respective auxiliary fans may be provided in each case.

The proposed heat pump tumble dryer may further comprise a refrigerant cycle control unit which is adapted and designed for operating the heat pump tumble dryer according to the proposed method or any embodiment thereof.

As to advantages and advantageous effects of the heat pump tumble dryer, reference is made to the discussion in connection with the proposed method or any embodiment thereof. The heat pump tumble dryer may comprise respective temperature sensors, in particular NTC and PTC temperature sensors, and respective humidity and pressure sensors, connected to the refrigerant cycle control unit and adapted and located to measure respective temperature, humidity and pressure values. Respective temperature, pressure and humidity values can be used to operate the at least one auxiliary fan. The calculation of temperature differences or other operations in connection with respective temperature and pressure values may be executed by the cycle control unit. Further, the at least one auxiliary heat exchanger may be at least one of an auxiliary refrigerant evaporator and auxiliary refrigerant condenser. Respective auxiliary fans, and, as the case may be, associated ducting and the like may be provided and arranged such that respective air streams can be adequately impinged at the at least one auxiliary heat exchanger. Air for generating respective air streams may be taken from the outside of the heat pump tumble dryer via front, back or side openings provided in the heat pump tumble dryer housing. It is also possible that air for generating respective air streams is at least partially taken from locations inside the heat pump tumble dryer housing.

A heat pump tumble dryer may comprise a heat pump unit with a primary refrigerant evaporator for cooling process air, a primary refrigerant condenser for heating process air, and further comprising at least one auxiliary refrigerant evaporator and at least one auxiliary refrigerant condenser respectively connected between the primary refrigerant evaporator and the primary refrigerant condenser or a compressor operating in the auxiliary refrigerant cycle. In this case, the heat pump tumble dryer comprises both an auxiliary refrigerant evaporator and auxiliary condenser that may be operated independently from each other. This has the advantage that both the heat-up phase and the process of removing excess heat can be optimized independent from each other in a more flexible way, in particular with respect to energetic considerations. The heat-up phase can be optimized by operating the auxiliary refrigerant evaporator in an initial operational stage for example. The auxiliary refrigerant condenser may be operated in an advanced stage or phase in which removal of excess heat from the refrigerant is required for keeping optimal refrigerant working conditions.

In the case that both an auxiliary refrigerant evaporator and auxiliary refrigerant condenser shall be available, it is possible that at least one auxiliary heat exchanger is a dual mode heat exchanger which is operable in a heat evaporator and a heat condenser mode. In this case it is possible to switch the heat exchanger from auxiliary evaporator mode to auxiliary condenser mode and vice versa according to respective needs, in particular in response or dependent on certain parameter values as described further above. Such parameter values may comprise temperature, pressure and/or humidity values of refrigerant, process air, ambient air.

The heat pump tumble dryer as proposed immediately beforehand may comprise a refrigerant cycle control unit adapted and designed for operating the heat pump tumble dryer according to the proposed method or any embodiment thereof. As to advantages and advantageous effects reference is made to the discussion further above.

The at least one auxiliary fan of the heat pump tumble dryer may be adapted to impinge at least one of ambient air and waste heat augmented air from components of the heat pump tumble dryer at least one of the at least one auxiliary heat exchanger.

In the case that at least one auxiliary heat exchanger is operated as an auxiliary refrigerant evaporator, a mutual arrangement of the auxiliary refrigerant evaporator, at least one auxiliary fan and a motor or other waste heat generating components of the heat pump tumble dryer with respect to an auxiliary fan airflow is at least one of:
- the auxiliary fan, auxiliary refrigerant evaporator (16) and motor are arranged in series
- the auxiliary fan is arranged between the motor and the auxiliary refrigerant evaporator,
- the auxiliary refrigerant evaporator is arranged between the motor and the auxiliary fan.

It is possible and in some cases preferred, that the at least one auxiliary fan is adapted to suck in air from at least one of inside the cabinet or casing of the heat pump tumble dryer, outside the cabinet, in particular from a rear, front or bottom side of the heat pump tumble dryer.

Temperature sensors arranged outside the process air circuit and provided for measuring or detecting an air temperature may preferably be arranged near or at the auxiliary refrigerant evaporator. The measured temperatures may be used for controlling operation of the at least one auxiliary fan.

At least one of the at least one temperature sensor arranged outside the process air circuit may be arranged at least one of near or at the at least one auxiliary refrigerant evaporator, near or at the at least one auxiliary fan, between one of the at least one auxiliary refrigerant evaporator and at least one auxiliary fan, between waste heat generating components, in particular electric components, of the heat pump tumble dryer, and the at least one auxiliary fan, between waste heat generating components, in particular electric components, such as a motor of the heat pump tumble dryer, and the at least one auxiliary refrigerant evaporator.

As becomes obvious from the above discussion, the proposed method and heat pump tumble dryers are suitable for improving operational efficiency, in particular with respect to energetic aspects. In particular they are effective in speeding up the process of drying cloths in that the initial heat-up phase can be shortened. Further, it is possible to obtain or maintain optimal refrigerant working conditions in advanced operational stages, in that excess heat can be removed by an auxiliary condenser functionality.

Embodiments of the invention will now be described in connection with the annexed figures, in which
- Fig. 1: schematically shows a comprehensive configuration of a heat pump tumble dryer;
- Fig. 2: diagrams refrigerant inlet and outlet temperatures in the heat-up phase;
- Fig. 3: schematically shows a second configuration of a heat pump tumble dryer;
- Fig. 4: schematically shows a third configuration of a heat pump tumble dryer;
- Fig. 5: shows a first operational mode of the third configuration shown in Fig. 4;
- Fig. 6: shows a second operational mode of the third configuration shown in Fig. 4; and
- Fig. 7: shows an arrangement of certain components of the heat pump tumble dryer and in particularly the location/position/place where the auxiliary refrigerant evaporator is arranged at the heat pump dryer.

The following description of embodiments of a heat pump dryer shall not be construed as limiting the scope of the invention. In particular, features jointly shown in any of the figures can be implemented alone or in any other combination as discussed further above.

If not otherwise stated like elements are denoted by like reference signs throughout the figures. The figures may not be true to scale, and scales of different figures may be different.

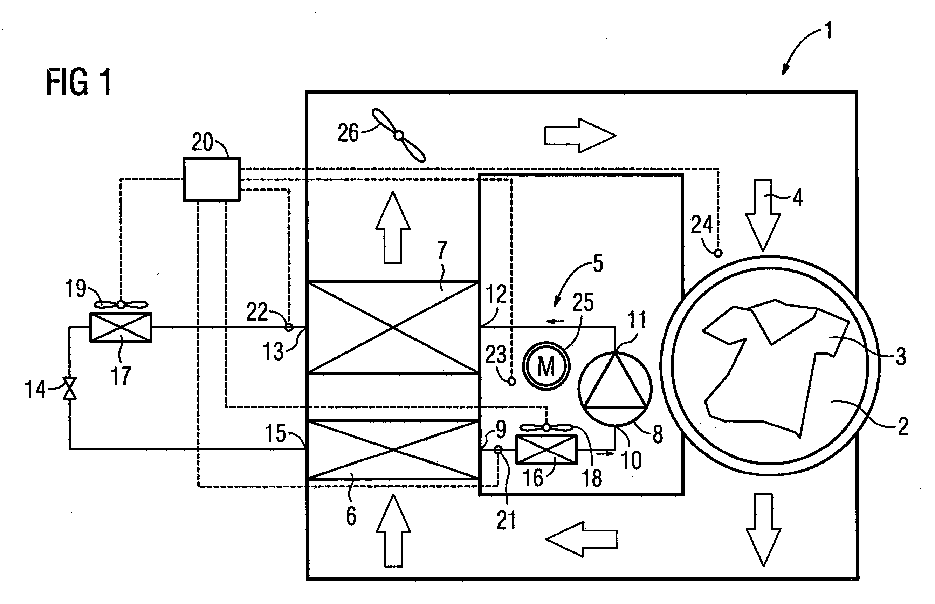

Fig. 1 schematically shows a comprehensive configuration of a heat pump dryer 1, preferably a heat pump tumble dryer. Comprehensive shall mean that the configuration shows more features and components than are necessary to implement the invention.

The heat pump dryer 1 comprises a drying chamber 2, preferably a rotatable drum, in which wet clothing 3 to be dried can be arranged. For drying clothing 3, process air 4 is circulated through a process air circuit comprising the drying chamber 2. In more detail, heated process air 4 with a comparative low relative humidity is fed into the drying drum 2 impinging at the wet clothing 3 and absorbing or withdrawing humidity of wet clothing 3.

Process air 4 having a comparatively high relative humidity leaves the drying drum 2 and is cooled down to remove humidity therefrom. After that, the process air 4 is reheated, thereby reducing its relative humidity, and is fed into the drying drum 2 again.

For dehumidification and reheating the process air 4, the heat pump tumble dryer 1 comprises a heat pump unit 5. The heat pump unit 5 comprises a primary refrigerant evaporator 6 and a primary refrigerant condenser 7. For drying clothing 3, the process air circuit further comprises the primary refrigerant evaporator 6 and the primary refrigerant condenser 7.

Further, the heat pump unit 5 comprises a compressor 8 interconnected between the primary refrigerant evaporator 6 and primary refrigerant condenser 7. In more detail, a primary refrigerant evaporator outlet 9 is connected to a compressor inlet 10. A compressor outlet 11 is connected to a primary refrigerant condenser inlet 12. A primary refrigerant condenser outlet 13 is connected via refrigerant expansion means such as throttling element 14, a capillary or an adjustable valve for example, to a primary refrigerant evaporator inlet 15. As such, the heat pump unit 5 described so far corresponds to an ordinary tumble dryer heat pump with which heat is transferred from the primary refrigerant evaporator 6 to the primary refrigerant condenser 7. In particular, refrigerant circulated in the heat pump unit closed circuit is cooled down at the primary refrigerant evaporator 6 and heated up at the primary refrigerant condenser 7.

The relatively low temperature at the primary refrigerant evaporator 6 is used to cool down, i. e. to dehumidify, the process air 4 having exited the drying drum 2. The relatively high temperature at the primary refrigerant condenser 7 is used to reheat the process air 4 to be fed to the drying drum 2.

The heat pump unit 5 further comprises two auxiliary heat exchangers, an auxiliary refrigerant evaporator 16 and an auxiliary refrigerant condenser 17 in the present case. Note that it is not mandatory that exactly two auxiliary heat exchangers are provided. Rather, the number of auxiliary refrigerant heat exchangers can be varied from one to nearly any arbitrary number.

The auxiliary refrigerant evaporator 16 is interposed between the primary refrigerant evaporator 6 and the compressor 8. The auxiliary refrigerant condenser 17 is interposed between the primary refrigerant condenser 7 and the primary refrigerant evaporator 6 downstream the primary refrigerant condenser 7 but upstream the throttling element 14. Note that the direction of refrigerant flow is indicated in Fig. 1 by small arrows. The auxiliary heat exchangers are arranged outside the process air circuit, i. e. that they are not impinged with process air 4.

The auxiliary refrigerant evaporator 16 serves to speed up heat transfer to the primary refrigerant condenser 7, i. e. to speed up the heat-up phase of the heat pump tumble dryer 1.

The auxiliary refrigerant condenser serves to remove excess heat from the refrigerant which may become relevant in advanced stages of tumble dryer operation. As can be seen, the purpose of the auxiliary heat exchangers is quite special. Therefore it is required to adequately and exactly operate the auxiliary heat exchangers, as provided and proposed herein, and to provide respective operational conditions.

In order to have a better control over the auxiliary heat exchangers, there are provided a first fan 18 and second fan 19, which are adapted to impinge an air stream at the auxiliary refrigerant evaporator 16 and auxiliary refrigerant condenser 17, respectively.

It has been found by the inventors, that in view of energetic aspects it is of crucial importance to adequately control the first fan 18 and, if applicable, also the second fan 19 according to selected temperatures or pressures of the refrigerant and/or process air 4, measured at specific locations along the heat pump refrigerant circuit or process air circuit.

Therefore, the proposed heat pump tumble dryer further comprises a refrigerant cycle control unit 20 which is adapted and designed to control the first 18 and second fan 19 according to special temperature values as exemplarily set out further below. Note that also refrigerant pressure values or process air pressure values or process air humidity values may be used in order to control the first 18 and second fan 19. In general, all temperature and/or pressure values mentioned so far and further below may be used, in particular but not restricted to the temperature of the air where the auxiliary refrigerant evaporator 16 is arranged, and also the temperature difference between air where the auxiliary refrigerant evaporator is arranged and refrigerant, preferably detected near or at the primary refrigerant evaporator 6.

In order to measure respective temperature values, the cycle control unit 20 is connected to first 21 to fourth temperature sensors 24. Based on the temperature values, which are respectively denoted as first to fourth temperature values, the refrigerant cycle control unit 20 can activate and deactivate the first 18 and second fan 19 as follows:
The first temperature value measured with the first temperature sensor 21 and corresponding essentially to the refrigerant temperature between the primary refrigerant evaporator 6 and auxiliary refrigerant evaporator 16, can be used together with the temperature of the air stream impinging at the auxiliary refrigerant evaporator 6, i. e. the third temperature value. The first fan 18 can be activated, if the first temperature value is lower than the third temperature value. The first fan 18 can be deactivated again, if the first temperature value is higher than the third temperature value. In doing so, at least the initial heat-up phase of the heat-pump unit 5 can be accelerated. In particular, the first fan 18 can be kept activated up to the point in which the temperature of the air stream impinging at the auxiliary refrigerant evaporator 16 is about equal the temperature of the refrigerant at the auxiliary refrigerant evaporator 16, i. e. or in other words up to the point in which the first temperature value is about the same as the third temperature value. The first fan 18 shall be deactivated if the first temperature value is higher than the third temperature value as in this case a negative energetic balance may result.

In order to keep the temperature of the air stream impinging at the auxiliary refrigerant evaporator 16 or the auxiliary dual mode heat exchanger 27 on high levels as long as possible, it is advantageous to use waste heat augmented air from components of the heat pump tumble dryer 1. Such waste heat may for example be generated by at least one waste heat generating component of the heat pump tumble dryer 1 such as an electric device, an electronic device, a powered device, a passive device, an electric motor, a controller for varying the speed of an electric, an inverter for example. Using waste heat in such a way improves energetic efficiency of the heat pump tumble dryer 1.

For example, while in normal condition the temperature of the ambient air around the location where the auxiliary refrigerant evaporator 16 or the auxiliary dual mode heat exchanger 27 is arranged ranges from 20°C to 23°C (obviously if the heat pump dryer is placed outside, the temperature may be different), in case of ambient air heated up by the heat released from the electric motor (for example), the ambient air temperature can range from 30°C to 45°C depending on the mutual arrangement of auxiliary refrigerant evaporator 16 or auxiliary dual mode heat exchanger 27, auxiliary fan 18, 19 and electric motor.

As it can be readily understood, this has beneficial effects during the initial operation of the heat pump dryer 1 by speeding up the warm up phase of the heat pump unit.

The first fan 18 can also or in the alternative be controlled in dependence of the fourth temperature value, i.e. the process air temperature at an entrance region to the drying drum 2. At comparatively low fourth temperature values, indicating that the heat pump tumble dryer 1 is still in the initial heat-up phase, the first fan 18 can be activated. As soon as the fourth temperature value reaches a given threshold indicative of normal operational conditions, the first fan 18 can be deactivated again.

Turning now to the second fan 19 impinging an air stream at the auxiliary refrigerant condenser 17, the second temperature value, i. e. the temperature of the refrigerant at an refrigerant outlet of the primary refrigerant condenser 7, is used. As already mentioned, the auxiliary refrigerant condenser 17 is provided for the purpose of removing or even preventing overheat in the refrigerant. Therefore, the second fan 19 is activated if the second temperature reaches or exceeds a preset overheat temperature level. In the case that the temperature lies or falls below that level, the second fan 19 can or shall be deactivated in order to obtain optimal operation and steady conditions, in particular with respect to energetic aspects.

For sake of completeness it shall be mentioned that the heat pump tumble dryer 1 comprises a third fan 26 adapted and designed for circulating the process air 4 within the heat pump tumble dryer 1.

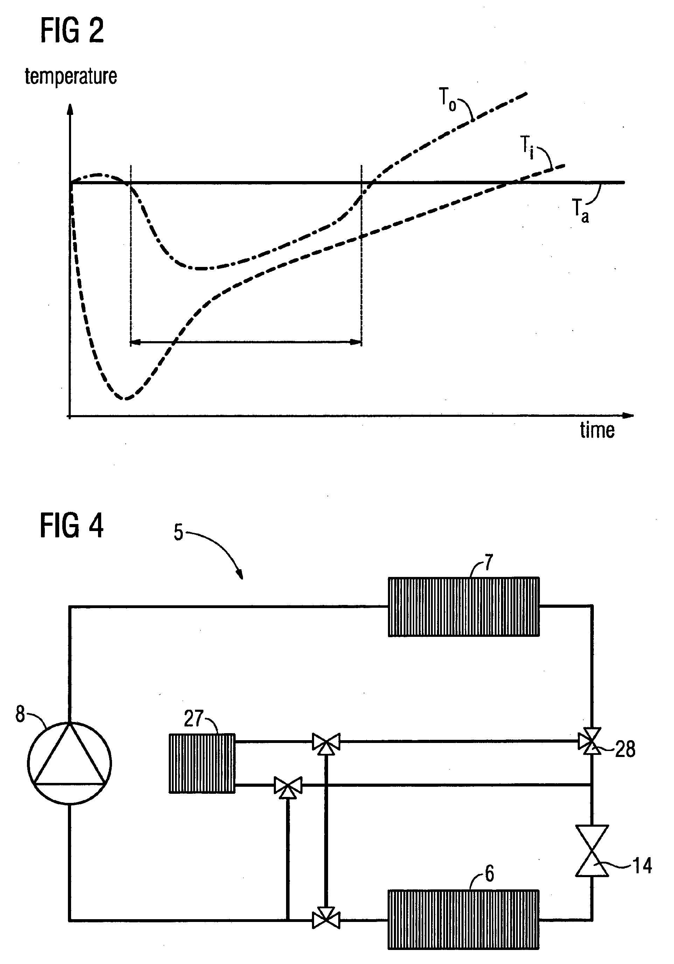

Fig. 2 diagrams refrigerant evaporator inlet temperatures Tᵢ , refrigerant evaporator outlet temperatures Tₒ and ambient air temperature Tₐ versus operational time. The ambient air temperature Tₐ may be the temperature of ambient air of the area where the auxiliary refrigerant evaporator 16 is arranged with or without heating provided by electric or electronic components of the dryer 1. Under normal conditions, ambient air temperature Tₐ remains constant over time. In the heat up phase of the heat pump tumble dryer 1, the outlet temperature Tₒ first raises, then drops and finally raises again. The inlet temperature Tᵢ has a similar behaviour. Especially in the time interval, in which the outlet temperature Tₒ is below ambient air temperature Tₐ, which is indicated by a double arrow in Fig. 2, the auxiliary refrigerant evaporator 16 can effectively be used to shorten the heating-up phase of the heat pump tumble dryer 1.

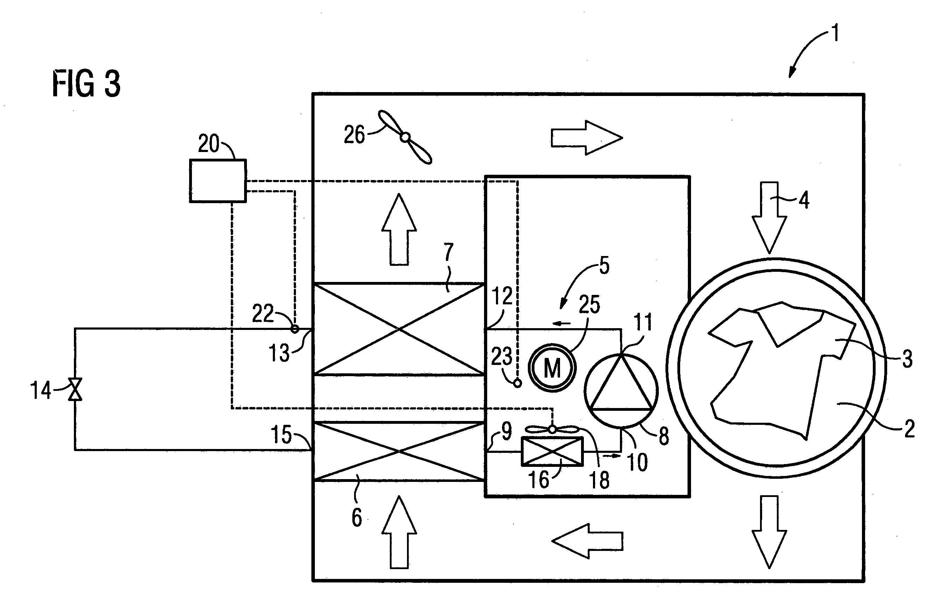

Fig. 3 shows a different configuration, in which the auxiliary refrigerant condenser 17 and related components are left out. With the second configuration, only the second temperature value, i. e. the refrigerant temperature at the primary refrigerator condenser outlet 13, and the third temperature value, i. e. the temperature of the air stream impinged at the auxiliary refrigerant evaporator 16, are or can be used. In using these temperature values or probably only the third temperature value, the heat up phase can at least roughly be identified and the first fan 18 can be operated accordingly, in particular as described in connection with Fig. 1 and 2. As can be seen, with the second configuration, the heat-up phase of the heat-pump tumble dryer 1 can be optimized.

Fig. 4 schematically shows a third configuration of a heat pump tumble dryer. For the sake of clarity, only components of the heat pump unit 5 are shown. The difference as compared to the first configuration is that the third configuration comprises an auxiliary dual mode heat exchanger 27 instead of the auxiliary refrigerant evaporator 16 and auxiliary refrigerant condenser 17. The dual mode heat exchanger can be operated as an auxiliary refrigerant evaporator and auxiliary refrigerant condenser.

The auxiliary dual mode heat exchanger 27 is connected via ducting, and valves 28, in the present case three way valves, with the compressor 8, the primary refrigerant evaporator 6 and the primary refrigerant condenser 7.

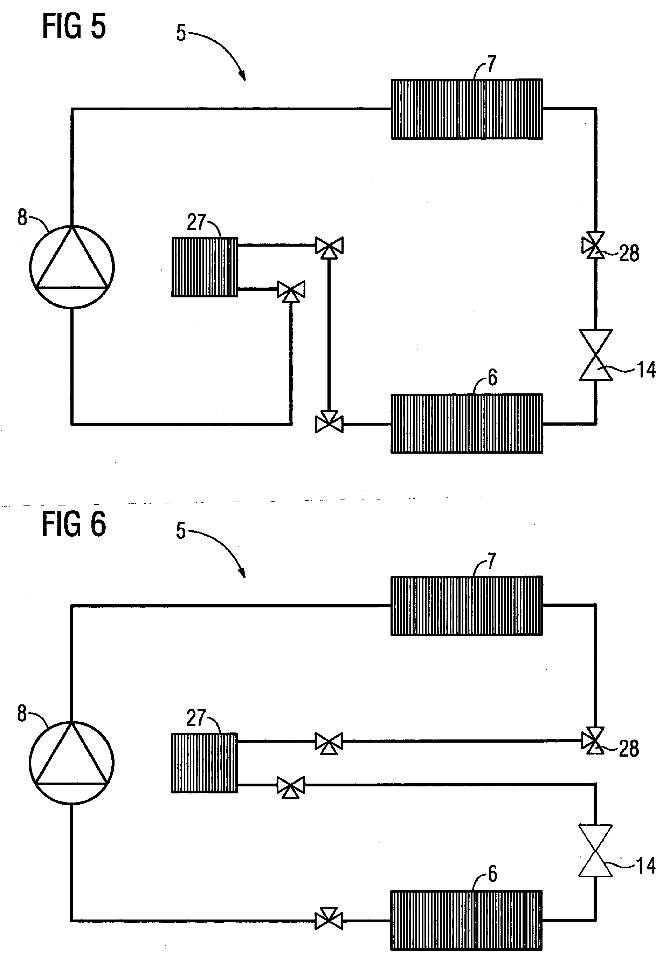

The auxiliary dual mode heat exchanger 27 acts as an auxiliary refrigerant evaporator if switch positions of the valves 28 are such that a ducting as indicated in Fig. 5 is obtained. In Fig. 5, inactive ducts are visualized in a shade of grey, whereas active ducts are visualized in black. The operational mode as possible with the ducting according to Fig. 5 can be selected in the initial operational phase in order to speed-up the heat-up process.

In a later operational stage, when the problem of overheating arises, the auxiliary dual mode heat exchanger 27 can be used as an auxiliary refrigerant condenser, in order to remove excess heat. The ducting required for operating the auxiliary dual mode heat exchanger 27 as auxiliary refrigerant condenser is indicated in Fig. 6 where inactive ducts are visualized in a shade of grey, whereas active ducts are visualized in black.

In case of a single auxiliary dual mode heat exchanger 27 with commutator or in case of separated auxiliary condenser and auxiliary evaporator, a control unit, in particular the refrigerant cycle control unit 20, may switch from one mode to another or activate/deactivate the fan of the auxiliary refrigerant condenser and auxiliary refrigerant evaporator in response of some certain parameter:
- temperature/pressure of the refrigerant,
- temperature/humidity of the process air 4,
- temperature of the ambient air where the auxiliary evaporator is arranged,
- temperature difference between the ambient air where the auxiliary evaporator is arranged and refrigerant temperature (preferably detected near or at the primary evaporator)

As it can be seen, providing an auxiliary dual mode heat exchanger 27 gives the same advantages, from a functional viewpoint, as the configuration in which both an auxiliary refrigerant evaporator 16 and condenser 17 are provided, but additionally provides the possibility to save space and components since only one heat exchanger can be installed at the dryer. It shall be mentioned, that at least one fan comparable to the first 18 and second fan 19 can be provided, and which may be adapted to impinge respective air streams at the dual mode heat exchanger 27, preferably a single fan can be provided.

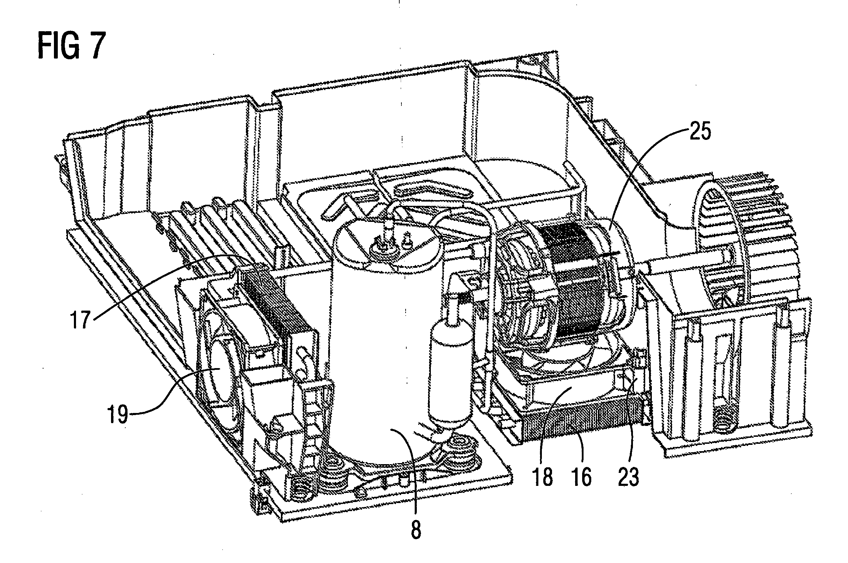

Fig. 7 shows an arrangement of selected components of the heat pump tumble dryer. In more detail, an auxiliary evaporator 16, an auxiliary fan 18 and a motor 25 of the heat pump tumble dryer are shown, which are arranged in series in the present case.

The auxiliary fan 18 is arranged between the motor 25 and the auxiliary refrigerant evaporator 16. The auxiliary fan 18 can be operated such that an auxiliary fan airflow from the motor 25 towards the auxiliary refrigerant evaporator 16 is generated.

During operation of the motor 25 waste heat is generated. Such waste heat will lead to elevated temperatures within the cabinet of the heat pump tumble dryer. In particular, air guided, blown or as in the present case sucked through regions with waste heat sources is heated up and impinged at the auxiliary refrigerant evaporator 16. In this case, the initial heating up time of the auxiliary refrigerant evaporator 16 can be greatly reduced and energy consumption can be reduced. Note that other arrangements of the motor 25, or other waste heat generating elements or components, the auxiliary fan 18 and the auxiliary refrigerant evaporator 16 are conceivable, such as for example arrangements as mentioned further above.

In Fig. 7 there is further shown a temperature sensor 23 which is arranged between the motor 25 and the auxiliary fan 18. The temperature sensor 23 is provided for determining an air temperature near or at the motor 25 and the auxiliary fan 18. The temperature detected by the temperature sensor 23 can be used to control the auxiliary fan 18, as described further above.

Note that there may be provided more than one temperature sensor, which temperature sensors may be placed in different locations, such for example near or at the at least one auxiliary refrigerant evaporator 16, between the auxiliary refrigerant evaporator 16 and auxiliary fan 18, between waste heat generating components, such as the motor or electric components of the heat pump tumble dryer, and the at least one auxiliary refrigerant evaporator 16.

It shall further be noted, that the mutual arrangement of motor 25, auxiliary fan 8 and auxiliary refrigerant evaporator 16 may differ from the arrangement shown in Fig. 7 such that alternative or other locations for the temperature sensors are also conceivable.

In all, it can be seen, that the heat pump tumble dryer and respective methods of operating the same make it possible to operate a tumble dryer more effectively, in particular in view of energetic aspects.

### List of reference numerals

- 1: heat pump tumble dryer
- 2: drying drum
- 3: clothing
- 4: process air
- 5: heat pump unit
- 6: primary refrigerant evaporator
- 7: primary refrigerant condenser
- 8: compressor
- 9: primary refrigerant evaporator outlet
- 10: compressor inlet
- 11: compressor outlet
- 12: primary refrigerant condenser inlet
- 13: primary refrigerant condenser outlet
- 14: throttling element
- 15: primary refrigerant evaporator inlet
- 16: auxiliary refrigerant evaporator
- 17: auxiliary refrigerant condenser
- 18: first/auxiliary fan
- 19: second/auxiliary fan
- 20: refrigerant cycle control unit
- 21-24: first to fourth temperature sensor
- 25: motor
- 26: third fan
- 27: dual mode heat exchanger
- 28: valve
- Tᵢ: inlet temperature
- Tₒ: outlet temperature
- Tₐ: ambient air temperature

## Claims

1. Method of operating a heat pump dryer (1), the heat pump dryer (1) comprising a process air circuit and a heat pump unit (5) having a primary refrigerant evaporator (6) for cooling process air (4), a primary refrigerant condenser (7) for heating process air (4), an auxiliary refrigerant evaporator (16) arranged outside the process air circuit and connected between the primary refrigerant evaporator (6) and a compressor (8) of the heat pump unit (5), and at least one auxiliary fan (18) adapted to impinge an air stream at the auxiliary refrigerant evaporator (16), **characterized in that** the at least one auxiliary fan (16) is activated and deactivated by a control unit (20) according to at least one of
- a temperature of the refrigerant and/or a pressure of the refrigerant, both preferably measured near or at a refrigerant outlet (9) of the primary refrigerant evaporator (6),
- a temperature of refrigerant near or at an refrigerant outlet or inlet of the auxiliary refrigerant evaporator (16),
- a temperature of the air near or at the auxiliary refrigerant evaporator (16),
- a temperature difference between refrigerant and air near or at the auxiliary refrigerant evaporator (16).

2. Method according to claim 1, wherein the at least one auxiliary fan (16) is activated and deactivated according to a temperature difference between refrigerant and air near or at the auxiliary refrigerant evaporator (16), the refrigerant temperature being measured at the inlet or outlet of the primary refrigerant evaporator (6) or at the inlet or outlet of the auxiliary refrigerant evaporator (16).

3. Method according to at least one of claims 1 to 2, wherein respective temperature and pressure values used by the control unit (20) are measured by at least one of a temperature sensor (21- 24), pressure sensor of the heat pump dryer (1).

4. Method according to at least one of claims 1 to 3, wherein at least one (18) of the at least one auxiliary fan (18, 19) is activated if the temperature (Tₒ) of the refrigerant near or at an outlet (9) of the primary refrigerant evaporator (6) or near or at an inlet of the auxiliary refrigerant evaporator (16) is at least below a first preset temperature (Tₐ), and wherein the at least one fan (18) is deactivated if the temperature (Tₒ) of the refrigerant near or at an outlet (9) of the primary refrigerant evaporator (6) or near or at an inlet of the auxiliary refrigerant evaporator (16) is at least above a first preset temperature (Tₐ).

5. Method according to at least one of claims 1 to 4, wherein at least one (18) of the at least one auxiliary fan (18, 19) is activated if the temperature (Tₐ) of the respective fan air stream is at least above the temperature (Tₒ) of the refrigerant at the refrigerant outlet (9) of the primary refrigerant evaporator (6) or inlet of the auxiliary refrigerant evaporator (16), and wherein the at least one fan (18) is deactivated if the temperature (Tₐ) of the fan air stream is at least below the temperature (Tₒ) of the refrigerant at the refrigerant outlet of the primary refrigerant evaporator (6).

6. Method according to at least one of claims 1 to 5, wherein the auxiliary refrigerant evaporator (16) is a dual mode auxiliary heat exchanger (27) arranged outside the process air circuit and operated in refrigerant evaporator mode, said dual mode auxiliary heat exchanger (27) being adapted to be operated in refrigerant condenser mode.

7. Method according to at least one of claims 1 to 6, wherein ambient air heated up by heat released from a waste heat generating components of the heat pump dryer (1) is impinged at the auxiliary refrigerant evaporator (16).

8. Heat pump dryer (1) comprising a process air circuit and a primary heat pump unit (5) having a primary refrigerant evaporator (6) for cooling process air (4) a primary refrigerant condenser (7) for heating process air (4), an auxiliary refrigerant evaporator (16), connected between the primary refrigerant evaporator (6) and a compressor (8) of the heat pump unit (5), and at least one auxiliary fan (18) adapted to impinge an air stream at the auxiliary refrigerant evaporator (16), **characterised by** comprising a control unit (20) adapted and designed for operating the heat pump dryer (1) according to a method of at least one of claims 1 to 7.

9. Heat pump dryer (1) according to claim 8, wherein at least a waste heat generating component (25) of the heat pump dryer (1), the auxiliary refrigerant evaporator (16) and the auxiliary fan (18) are mutually arranged so that the auxiliary fan (18) is adapted to impinge ambient air heated up by heat released from said waste heat generating component (25) at the auxiliary refrigerant evaporator (16), and/or at least a temperature sensor (23) is arranged outside the process air circuit and provided for detecting the temperature of the ambient air around the location where the auxiliary refrigerant evaporator (16) is arranged.

10. Heat pump dryer according to claim 9, wherein the mutual arrangement of the auxiliary refrigerant evaporator (16), the auxiliary fan (18) and the waste heat generating component (25) of the heat pump dryer with respect to the air stream an auxiliary fan airflow is at least one of:
- the auxiliary fan (18), auxiliary refrigerant evaporator (16) and waste heat generating component (25) are arranged in series,
- the auxiliary fan (18) is arranged between the waste heat generating component (25) and the auxiliary refrigerant evaporator (16),
- the auxiliary refrigerant evaporator (16) is arranged between the waste heat generating component (25) and the auxiliary fan (18),
- the auxiliary fan (18), auxiliary refrigerant evaporator (16) and waste heat generating component (25) are substantially aligned with respect to the air stream generated by the auxiliary fan (18),
- the auxiliary fan (18), auxiliary refrigerant evaporator (16) and waste heat generating component (25) are substantially arranged along the direction of the air stream generated by the auxiliary fan (18).

11. Heat pump dryer according to at least one of claims 9 or 10, wherein the temperature sensor (23) is arranged at least one of
- near or at the auxiliary refrigerant evaporator (16),
- near or at the auxiliary fan (18),
- between the auxiliary refrigerant evaporator (16) and the auxiliary fan (18),
- between the waste heat generating component (25) of the heat pump dryer, and the auxiliary fan (18),
- between the waste heat generating component (25) of the heat pump dryer and the auxiliary refrigerant evaporator (16).

12. Heat pump dryer according to at least one of claims 9 to 11, wherein the waste heat generating component (25) comprises an electric device and/or an electronic device and/or a powered device and/or a passive device.

13. Heat pump dryer according to claim 12, wherein the waste heat generating component (25) comprises at least one electric motor and/or at least one controller for varying the speed of an electric motor, preferably an inverter.

14. Heat pump dryer (1) according to at least one of claims 8 to 13, wherein the auxiliary refrigerant evaporator (16) is an auxiliary dual mode heat exchanger (27) arranged outside the process air circuit and operable in refrigerant evaporator mode or in refrigerant condenser mode.

15. Heat pump dryer (1) according to at least one of claims 8 to 14, further comprising an auxiliary refrigerant condenser (17) arranged outside the process air and connected between the primary refrigerant condenser (7) and refrigerant expansion means of the heat pump unit (5).

## Patentansprüche

1. Verfahren zum Betreiben eines Wärmepumpentrockners (1), wobei der Wärmepumpentrockner (1) einen Prozessluftkreislauf und eine Wärmepumpeneinheit (5) mit einem primären Kältemittelverdampfer (6) zum Kühlen von Prozessluft (4), einem primären Kältemittelkondensator (7) zum Erhitzen von Prozessluft (4), einen Zusatzkältemittelverdampfer (16), der außerhalb des Prozessluftkreislaufs angeordnet und zwischen dem primären Kältemittelverdampfer (6) und einem Kompressor (8) der Wärmepumpeneinheit (5) angeordnet ist, und zumindest einen Zusatzlüfter (18) umfasst, der so ausgelegt ist, dass er einen Luftstrom auf den Zusatzkältemittelverdampfer (16) beaufschlagt, **dadurch gekennzeichnet, dass** der zumindest eine Zusatzlüfter (16) durch eine Steuereinheit (20) gemäß zumindest einem des Folgenden aktiviert und deaktiviert wird:
- einer Temperatur des Kältemittels und/oder einem Druck des Kältemittels, wobei beides vorzugsweise nahe oder an einem Kältemittelauslass (9) des primären Kältemittelverdampfers (6) gemessen wird,
- einer Temperatur des Kältemittels nahe oder an einem Kältemittelauslass oder -einlass des Zusatzkältemittelverdampfers (16),
- einer Temperatur der Luft nahe oder an dem Zusatzkältemittelverdampfer (16),
- einem Temperaturunterschied zwischen dem Kältemittel und Luft nahe oder an dem Zusatzkältemittelverdampfer (16),

2. Verfahren nach Anspruch 1, wobei der zumindest eine Zusatzlüfter (16) gemäß einem Temperaturunterschied zwischen dem Kältemittel und der Luft nahe oder an dem Zusatzkältemittelverdampfer (16) aktiviert und deaktiviert wird, wobei die Kältemitteltemperatur am Einlass oder Auslass des primären Kältemittelverdampfers (6) oder nahe oder an dem Einlass oder Auslass des Zusatzkältemittelverdampfers (16) gemessen wird.

3. Verfahren nach zumindest einem der Ansprüche 1 bis 2, wobei jeweilige Temperatur- und Druckwerte, die von der Steuereinheit (20) verwendet werden, von zumindest einem eines Temperatursensors (20 bis 24) und eines Drucksensors des Wärmepumpentrockners (1) gemessen werden.

4. Verfahren nach zumindest einem der Ansprüche 1 bis 3, wobei zumindest einer (18) des zumindest einen Zusatzlüfters (18, 19) aktiviert wird, wenn die Temperatur (Tₒ) des Kältemittels nahe oder an dem Auslass (9) des primären Kältemittelverdampfers (6) oder nahe oder an dem Einlass des Zusatzkältemittelverdampfers (16) zumindest unter einer vorab eingestellten Temperatur (Tₐ) ist, und wobei der zumindest eine Lüfter (18) deaktiviert wird, wenn die Temperatur (Tₒ) des Kältemittels nahe oder an einem Auslass (9) des primären Kältemittelverdampfers (6) oder nahe oder an einem Einlass des Zusatzkältemittelverdampfers (16) zumindest über einer ersten vorab eingestellten Temperatur (Tₐ) liegt.

5. Verfahren nach zumindest einem der Ansprüche 1 bis 4, wobei der zumindest eine (18) des zumindest einen Zusatzlüfters (18, 19) aktiviert wird, wenn die Temperatur (Tₐ) des jeweiligen Lüfterluftstroms zumindest über der Temperatur (Tₒ) des Kältemittels an dem Kältemittelauslass (9) des primären Kältemittelverdampfers (6) oder dem Einlass des Zusatzkältemittelverdampfers (16) ist, und wobei der zumindest eine Lüfter (18) deaktiviert wird, wenn die Temperatur (Tₐ) des Lüfterluftstroms zumindest unter der Temperatur (Tₒ) des Kältemittels an dem Kältemittelauslass des primären Kältemittelverdampfers (6) liegt.

6. Verfahren nach zumindest einem der Ansprüche 1 bis 5, wobei der Zusatzkältemittelverdampfer (16) ein Dualmodus-Zusatzwärmetauscher (27) ist, der außerhalb des Prozessluftkreislaufs angeordnet ist und im Kältemittelverdampfermodus betrieben wird, wobei der Dualmodus-Zusatzwärmetauscher (27) so ausgelegt ist, dass er in einem Kältemittelkondensatormodus betrieben wird.

7. Verfahren nach zumindest einem der Ansprüche 1 bis 6, wobei die Umgebungsluft, die durch die von einer abwärmeerzeugenden Komponente des Wärmepumpentrockners (1) freigesetzte Wärme erhitzt ist, auf den Zusatzkältemittelverdampfer (16) beaufschlagt wird.

8. Wärmepumpentrockner (1), umfassend einen Prozessluftkreislauf und eine primäre Wärmepumpeneinheit (5) mit einem primären Kältemittelverdampfer (6) zum Kühlen von Prozessluft (4), einem primären Kältemittelkondensator (7) zum Erhitzen von Prozessluft (4), einen Zusatzkältemittelverdampfer (16), der zwischen dem primären Kältemittelverdampfer (6) und einem Kompressor (8) der Wärmepumpeneinheit (5) angeordnet ist, und zumindest einen Zusatzlüfter (18), der so ausgelegt und konzipiert ist, dass er einen Luftstrom auf den Zusatzkältemittelverdampfer (16) beaufschlagt, **dadurch gekennzeichnet, dass** er eine Steuereinheit (20) umfasst, die so ausgelegt ist, dass sie den Wärmepumpentrockner (1) gemäß einem Verfahren nach zumindest einem der Ansprüche 1 bis 7 betreibt.

9. Wärmepumpentrockner (1) nach Anspruch 8, wobei zumindest eine abwärmeerzeugende Komponente (25) des Wärmepumpentrockners (1), der Zusatzkältemittelverdampfer (16) und der Zusatzlüfter (18) wechselseitig angeordnet sind, so dass der Zusatzlüfter (18) so ausgelegt ist, dass er Umgebungsluft, die von der aus der abwärmeerzeugenden Komponente (25) freigesetzten Wärme erhitzt ist, auf den Zusatzkältemittelverdampfer (16) beaufschlagt, und/oder zumindest ein Temperatursensor (23) außerhalb des Prozessluftkreislaufs angeordnet und bereitgestellt ist, um die Temperatur der Umgebungsluft um die Position herum, an der der Zusatzkältemittelverdampfer (16) angeordnet ist, zu erkennen.

10. Wärmepumpentrockner nach Anspruch 9, die wechselseitige Anordnung des Zusatzkältemittelverdampfers (16), des Zusatzlüfters (18) und der abwärmeerzeugenden Komponente (25) des Wärmepumpentrockners in Bezug auf den Luftstrom oder eine Zusatzlüfter-Luftströmung zumindest eines ist von:
- der Zusatzlüfter (18), der Zusatzkältemittelverdampfer (16) und die abwärmeerzeugende Komponente (25) sind in Reihe angeordnet,
- der Zusatzlüfter (18) ist zwischen der abwärmeerzeugenden Komponente (25) und dem Zusatzkältemittelverdampfer (16) angeordnet,
- der Zusatzkältemittelverdampfer (16) ist zwischen der abwärmeerzeugenden Komponente (25) und dem Zusatzlüfter (18) angeordnet,
- der Zusatzlüfter (18), der Zusatzkältemittelverdampfer (16) und die abwärmeerzeugende Komponente (25) sind in Bezug auf den vom Zusatzlüfter (18) erzeugten Luftstrom im Wesentlichen ausgefluchtet,
- der Zusatzlüfter (18), der Zusatzkältemittelverdampfer (16) und die abwärmeerzeugende Komponente (25) sind im Wesentlichen entlang der Richtung des vom Zusatzlüfter (18) erzeugten Luftstroms angeordnet.

11. Wärmepumpentrockner nach zumindest einem der Ansprüche 9 oder 10, wobei der Temperatursensor (23) zumindest gemäß einem des Folgenden angeordnet ist:
- nahe oder an dem Zusatzkältemittelverdampfer (16),
- nahe oder an dem Zusatzlüfter (18) zwischen dem Zusatzkältemittelverdampfer (16) und dem Zusatzlüfter (18),
- zwischen dem Zusatzkältemittelverdampfer (16) und dem Zusatzlüfter (18),
- zwischen der abwärmeerzeugenden Komponente (25) des Wärmepumpentrockners und dem Zusatzlüfter (18),
- zwischen der abwärmeerzeugenden Komponente (25) des Wärmepumpentrockners und dem Zusatzkältemittelverdampfer (16).

12. Wärmepumpentrockner nach zumindest einem der Ansprüche 9 bis 11, wobei die abwärmeerzeugende Komponente (25) eine elektrische Einrichtung und/oder eine elektronische Einrichtung und/oder eine mit Strom versorgte Einrichtung und/oder eine passive Einrichtung umfasst.

13. Wärmepumpentrockner nach Anspruch 12, wobei die abwärmeerzeugende Komponente (25) zumindest einen Elektromotor und/oder zumindest eine Steuereinheit zum Variieren der Geschwindigkeit eines Elektromotors, vorzugsweise eines Wechselrichters, umfasst.

14. Wärmepumpentrockner (1) nach zumindest einem der Ansprüche 8 bis 13, wobei der Zusatzkältemittelverdampfer (16) ein Dualmodus-Zusatzwärmetauscher (27) ist, der außerhalb des Prozessluftkreislaufs angeordnet und in einem Kältemittelverdampfermodus oder einem Kältemittelkondensatormodus betreibbar ist.

15. Wärmepumpentrockner (1) nach zumindest einem der Ansprüche 8 bis 14, ferner umfassend einen Zusatzkältemittelkondensator (17), der außerhalb des Prozessluftkreislaufes angeordnet und zwischen dem primären Kältemittelkondensator (7) und einem Kältemittelexpansionsmittel der Wärmepumpeneinheit (5) verbunden ist.

## Revendications

1. Procédé de fonctionnement de séchoir à pompe à chaleur (1), le séchoir à pompe à chaleur (1) comprenant un circuit d'air de traitement et une unité de pompe à chaleur (5) ayant un évaporateur de fluide frigorigène primaire (6) pour refroidissement d'air de traitement (4), un condenseur de fluide frigorigène primaire (7) pour chauffage d'air de traitement (4), un évaporateur de fluide frigorigène auxiliaire (16) agencé à l'extérieur du circuit d'air de traitement et relié entre l'évaporateur de fluide frigorigène primaire (6) et un compresseur (8) de l'unité de pompe à chaleur (5), et au moins un ventilateur auxiliaire (18) apte à créer un courant d'air incident sur l'évaporateur de fluide frigorigène auxiliaire (16), **caractérisé par le fait que** le ou les ventilateurs auxiliaires (16) sont activés et désactivés par une unité de commande (20) selon au moins l'une de :
- une température du fluide frigorigène et/ou une pression du fluide frigorigène, toutes les deux de préférence mesurées près ou à une sortie de fluide frigorigène (9) de l'évaporateur de fluide frigorigène primaire (6),
- une température de fluide frigorigène près ou à une sortie ou une entrée de fluide frigorigène de l'évaporateur de fluide frigorigène auxiliaire (16),
- une température de l'air près ou à l'évaporateur de fluide frigorigène auxiliaire (16),
- une différence de température entre le fluide frigorigène et l'air près ou à l'évaporateur de fluide frigorigène auxiliaire (16).

2. Procédé selon la revendication 1, dans lequel le ou les ventilateurs auxiliaires (16) sont activés et désactivés selon :
- une différence de température entre du fluide frigorigène et de l'air près ou à l'évaporateur de fluide frigorigène auxiliaire (16), la température de fluide frigorigène étant mesurée à l'entrée ou la sortie de l'évaporateur de fluide frigorigène primaire (6) ou à l'entrée ou la sortie de l'évaporateur de fluide frigorigène auxiliaire (16).

3. Procédé selon au moins l'une des revendications 1 à 2, dans lequel des valeurs de pression et de température respectives utilisées par l'unité de commande (20) sont mesurées par au moins l'un d'un capteur de température (21-24), d'un capteur de pression du séchoir à pompe à chaleur (1).

4. Procédé selon au moins l'une des revendications 1 à 3, dans lequel au moins l'un (18) du ou des ventilateurs auxiliaires (18, 19) est activé si la température (Tₒ) du fluide frigorigène près ou à une sortie (9) de l'évaporateur de fluide frigorigène primaire (6) ou près ou à une entrée de l'évaporateur de fluide frigorigène auxiliaire (16) est au moins au-dessous d'une première température préréglée (Tₐ) et dans lequel le ou les ventilateurs (18) sont désactivés si la température (Tₒ) du fluide frigorigène près ou à une sortie (9) de l'évaporateur de fluide frigorigène primaire (6) ou près ou à une entrée de l'évaporateur de fluide frigorigène auxiliaire (16) est au moins au-dessus d'une première température préréglée (Tₐ).

5. Procédé selon au moins l'une des revendications 1 à 4, dans lequel au moins l'un (18) du ou des ventilateurs auxiliaires (18, 19) est activé si la température (Tₐ) du courant d'air de ventilateur respectif est au moins au-dessus de la température (Tₒ) du fluide frigorigène à la sortie de fluide frigorigène (9) de l'évaporateur de fluide frigorigène primaire (6) ou l'entrée de l'évaporateur de fluide frigorigène auxiliaire (16) et dans lequel le ou les ventilateurs (18) sont désactivés si la température (Tₐ) du courant d'air de ventilateur est au moins au-dessous de la température (Tₒ) du fluide frigorigène à la sortie de fluide frigorigène de l'évaporateur de fluide frigorigène primaire (6).

6. Procédé selon au moins l'une des revendications 1 à 5, dans lequel l'évaporateur de fluide frigorigène auxiliaire (16) est un échangeur de chaleur auxiliaire double mode (27) agencé à l'extérieur du circuit d'air de traitement et actionné selon un mode évaporateur de fluide frigorigène, ledit échangeur de chaleur auxiliaire double mode (27) étant apte à être actionné selon un mode condenseur de fluide frigorigène.

7. Procédé selon au moins l'une des revendications 1 à 6, dans lequel de l'air ambiant réchauffé par de la chaleur dégagée par des composants à génération de chaleur perdue du séchoir à pompe à chaleur (1) est amené à être incident sur l'évaporateur de fluide frigorigène auxiliaire (16).

8. Séchoir à pompe à chaleur (1) comprenant un circuit d'air de traitement et une unité de pompe à chaleur primaire (5) ayant un évaporateur de fluide frigorigène primaire (6) pour refroidissement d'air de traitement (4), un condenseur de fluide frigorigène primaire (16) pour chauffage d'air de traitement (4), un évaporateur de fluide frigorigène auxiliaire (16), relié entre l'évaporateur de fluide frigorigène primaire (6) et un compresseur (8) de l'unité de pompe à chaleur (5), et au moins un ventilateur auxiliaire (18) apte à créer un courant d'air incident sur l'évaporateur de fluide frigorigène auxiliaire (16), **caractérisé par le fait qu'**il comprend une unité de commande (20) apte à et conçue pour actionner le séchoir à pompe à chaleur (1) selon un procédé selon au moins l'une des revendications 1 à 7.

9. Séchoir à pompe à chaleur (1) selon la revendication 8, dans lequel au moins un composant à génération de chaleur perdue (25) du séchoir à pompe à chaleur (1), l'évaporateur de fluide frigorigène auxiliaire (16) et le ventilateur auxiliaire (18) sont mutuellement agencés de telle sorte que le ventilateur auxiliaire (18) est apte à amener de l'air ambiant réchauffé par de la chaleur dégagée par ledit composant à génération de chaleur perdue (25) à être incident sur l'évaporateur de fluide frigorigène auxiliaire (16), et/ou au moins un capteur de température (23) est agencé à l'extérieur du circuit d'air de traitement et prévu pour détecter la température de l'air ambiant autour de la position où l'évaporateur de fluide frigorigène auxiliaire (16) est agencé.

10. Séchoir à pompe à chaleur selon la revendication 9, dans lequel l'agencement mutuel de l'évaporateur de fluide frigorigène auxiliaire (16), du ventilateur auxiliaire (18) et du composant à génération de chaleur perdue (25) du séchoir à pompe à chaleur par rapport au courant d'air un écoulement d'air de ventilateur auxiliaire est au moins l'un de :
- le ventilateur auxiliaire (18), l'évaporateur de fluide frigorigène auxiliaire (16) et le composant à génération de chaleur perdue (25) sont agencés en série,
- le ventilateur auxiliaire (18) est agencé entre le composant à génération de chaleur perdue (25) et l'évaporateur de fluide frigorigène auxiliaire (16),
- l'évaporateur de fluide frigorigène auxiliaire (16) est agencé entre le composant à génération de chaleur perdue (25) et le ventilateur auxiliaire (18),
- le ventilateur auxiliaire (18), l'évaporateur de fluide frigorigène auxiliaire (16) et le composant à génération de chaleur perdue (25) sont sensiblement alignés par rapport au courant d'air généré par le ventilateur auxiliaire (18),
- le ventilateur auxiliaire (18), l'évaporateur de fluide frigorigène auxiliaire (16) et le composant à génération de chaleur perdue (25) sont sensiblement agencés le long de la direction du courant d'air généré par le ventilateur auxiliaire (18).

11. Séchoir à pompe à chaleur selon au moins l'une des revendications 9 ou 10, dans lequel le capteur de température (23) est agencé au moins à l'un de :
- près ou à l'évaporateur de fluide frigorigène auxiliaire (16),
- près ou au ventilateur auxiliaire (18),
- entre l'évaporateur de fluide frigorigène auxiliaire (16) et le ventilateur auxiliaire (18),
- entre le composant à génération de chaleur perdue (25) du séchoir à pompe à chaleur et le ventilateur auxiliaire (18),
- entre le composant à génération de chaleur perdue (25) du séchoir à pompe à chaleur et l'évaporateur de fluide frigorigène auxiliaire (16).

12. Séchoir à pompe à chaleur selon au moins l'une des revendications 9 à 11, dans lequel le composant à génération de chaleur perdue (25) comprend un dispositif électrique et/ou un dispositif électronique et/ou un dispositif alimenté et/ou un dispositif passif.

13. Séchoir à pompe à chaleur selon la revendication 12, dans lequel le composant à génération de chaleur perdue (25) comprend au moins un moteur électrique et/ou au moins un contrôleur pour faire varier la vitesse d'un moteur électrique, de préférence un onduleur.

14. Séchoir à pompe à chaleur (1) selon au moins l'une des revendications 8 à 13, dans lequel l'évaporateur de réfrigérateur auxiliaire (16) est un échangeur de chaleur double mode auxiliaire (27) agencé à l'extérieur du circuit d'air de traitement et actionnable selon un mode évaporateur de fluide frigorigène ou selon un mode condenseur de fluide frigorigène.

15. Séchoir à pompe à chaleur (1) selon au moins l'une des revendications 8 à 14, comprenant en outre un condenseur de fluide frigorigène auxiliaire (17) agencé à l'extérieur de l'air de traitement et relié entre le condenseur de fluide frigorigène primaire (7) et des moyens de détente de fluide frigorigène de l'unité de pompe à chaleur (5).
